# EUROPEAN PATENT APPLICATION

(11) **EP 1 447 763 A1**
(43) Date of publication of application: **18.08.2004**
(21) Application number: 03250831.9
(22) Date of filing: 11.02.2003
(51) Int. Cl.: G06F 17/60

(54) **Computer system for calculating transaction by card and method therefor**

(71) Applicant: Li, Chin-Chun, Chien-Chen District, Kaohsiung (TW)
(72) Inventor: Li, Chin-Chun, Chien-Chen District, Kaohsiung (TW)
(74) Representative: Nicholls, Michael John

(57) **Abstract**

The present invention relates to a computer system for calculating transaction by card(s) of members in the computer system. The computer system comprises: a judgment means, a calculating means, a database and a dispenser. The judgment means is used for judging a card transaction of a member in a contracted store with the computer system or an un-contracted store. If the transaction is paid by card in the contracted store, according to a contract between the contracted store and the computer system, the calculating means deducts a specific proportion amount from the transaction. The dispenser dispenses the specific proportion amount to the consumer member and to a plurality of higher-ranking members above the consumer member at different percentages. Therefore, for the members of the computer system, because the consumer member can get bonuses from the card transaction in the contracted store, the members are pleased to buy and pay something by card in the contracted store. On the other hand, for the contracted store and the issuer bank, because of an increase in transactions of members, the business and the profit of the contracted store and the issuer bank are also increased. Accordingly, the members, the contracted store and the bank can all receive profit. Furthermore, not only does the consumer member get bonuses from paying by card, but the higher-ranking members than the consumer member can also get bonuses.

## Description

### BACKGROUND OF THE INVENTION

### 1. Field of the invention

The present invention relates to a computer system, more particularly, to a computer system for calculating transaction by card(s) of members in the computer system, a method for calculating transaction by card(s) of members in the computer system, and a computer-readable medium for recording computer-executable programs for executing the method.

### 2. Description of the Related Art

A traditional credit card transaction system ("System") is under the process that consumers first purchase from a merchant by using card(s), and then pay the outstanding debit to issuer banks or companies. In addition, the issuer banks or companies pay the merchants those purchase amounts made by cards of their customers. The System usually deals with such general transaction paid by card under the above process.

Presently, in Taiwan some issuer banks would like to attract consumers to use their card more frequently under the method of points accumulating reward, but consumers, in general, need to consume at least twenty or thirty dollars by card in order to get only one point, and they always need to collect larger accumulating points to get a small gift. Under this circumstance, consumers will not emphasis on accumulating points since they will not get any real benefit from them. Therefore, the method of accumulating points cannot encourage consumers to use such cards from issuer bank more frequently.

Regarding merchants, some merchants and issuer banks execute contracts with a term where the customer will receive a special discount when making purchases with the issuer banks' cards at the merchants. However, such discount is too minor to attract consumers to purchase at such merchants.

Therefore, it is desirable to provide a novel and creative system to overcome the above problems.

### SUMMARY OF THE INVENTION

One objective of the present invention is to provide a computer system for calculating transaction by card(s) of members in the computer system. The computer system comprises: a judgment means, a calculating means, a database and a dispenser. The judgment means is used for judging a transaction paid by card of a member in a contracted store with the computer system or an un-contracted store. If the transaction is paid by card in the contracted store, according to a contract between the contracted store and the computer system, the calculating means deducts a specific proportion amount from the transaction. The database has a plurality of nodes for storing the data of members. Each node has an order and a rank. The dispenser dispenses the specific proportion amount of the transaction to the consumer member card and to a plurality of higher-ranking members above the consumer members at different percentages.

Therefore, for the members of the computer system, because members can get bonuses from the card transaction in the contracted store, the members are pleased to buy and pay something by card in the contracted store. On the other hand, for the contracted store and the issuer bank, because of the increase in the transaction by card of members, the business and the profit of the contracted store and the issuer bank are also increased. Accordingly, the members, the contracted store and the bank can all receive profit. Furthermore, not only does the consumer member get bonuses by card payment, but the higher-ranking members above the consumer member can also get bonuses.

Still another objective of the present invention is to provide a method for calculating card transaction of members in a computer system in order to obtain the above objects by executing the method in the above systems.

Still another objective of the present invention is to provide a computer-readable medium that records computer-executable programs for executing the method so that the computer system can be practiced.

Still other advantages of the present invention will become readily apparent by those skilled in the art from the following detailed description that is described by way of illustration of the drawings. As the invention will be realized, the invention can be implemented in other and different embodiments, and its several details can be referenced for modifications in various respects, without departing from the invention. Accordingly, the drawings and description are to be regarded as illustrative in nature and not as restrictive.

### BRIEF DESCRIPTION OF THE DRAWINGS

Fig. 1 is a block diagram illustrating a computer system according to the present invention.
Fig. 2 is a tree structure of the database according to the present invention.
Fig. 3 is a flow chart illustrating a method according to the present invention.

### DETAILED DESCRIPTION OF THE INVENTION

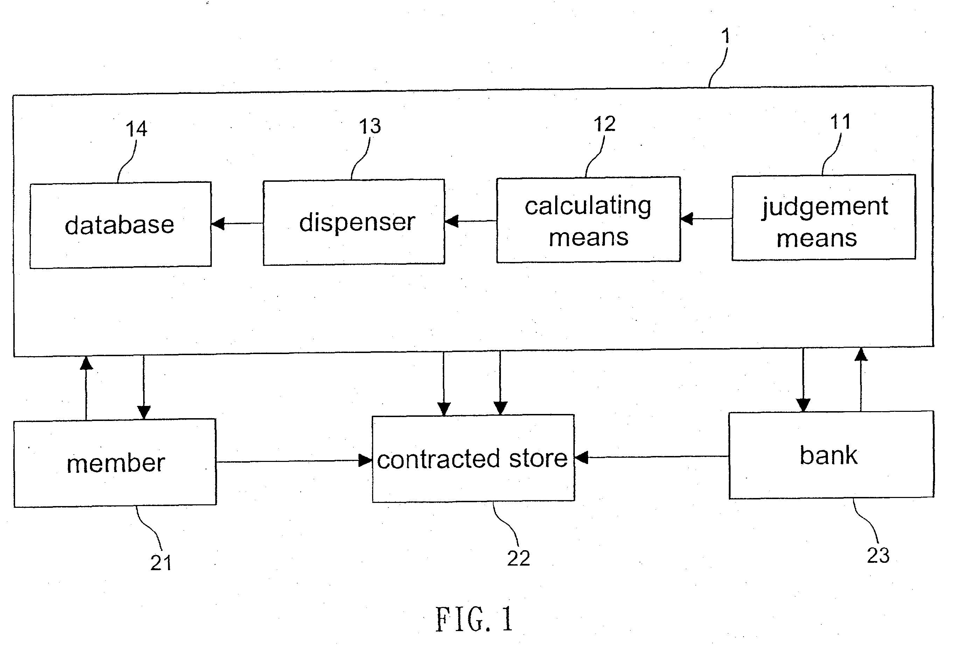

Referring to Fig. 1, a computer system 1 of the present invention is used to calculate card transaction of members in the computer system. The computer system 1 comprises: a judgment means 11, a calculating means 12, a database 14 and a dispenser 13. The judgment means 11 is used for judging a card transaction of a consumer member 21 in a contracted store 22 with the computer system 1 or in an un-contracted store. If the transaction is paid by card in the contracted store 22, according to a contract between the contracted store 22 and the computer system 1, the calculating means 12 deducts a specific proportion amount from the transaction. The specific proportion amount of the transaction can be feedback to the members of the computer system.

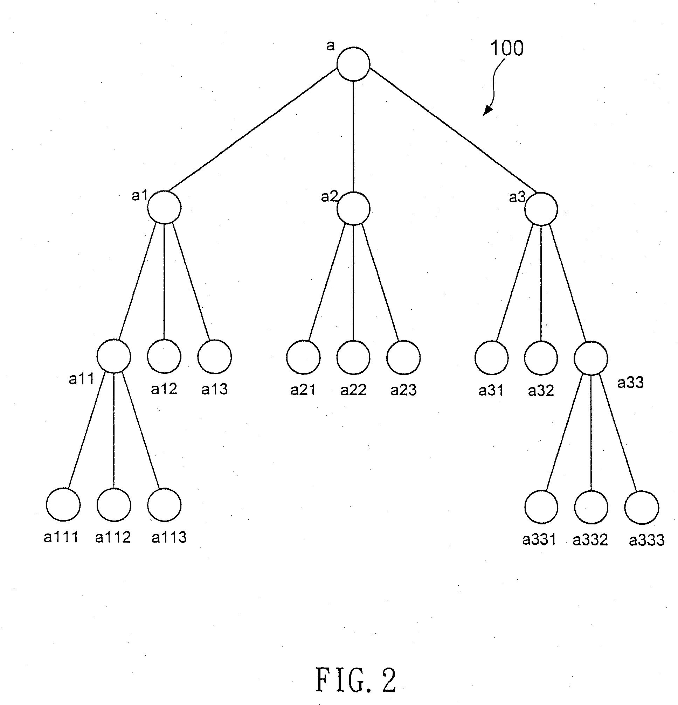

The database 14 has at least one tree structure. Referring to Fig. 2, a tree structure 100 has a plurality of node (a) to (a333). Each node has three branches. Each branch links to a node of the next rank. The node (a) of the first rank links to three nodes (a1), (a2) and (a3) through the branches. The node (a1) of the second rank links to three nodes (a11), (a12) and (a13). Therefore, each node has a different rank and order.

The dispenser 13 of the computer system 1 dispenses the specific proportion amount of the transaction to the consumer member 21 who paid by card and to a plurality of higher-ranking members above/over the consumer member 21 at different percentages. Therefore, the consumer member 21, for example, the node (a113), can get a part of the specific proportion amount of the transaction, and the higher-ranking members, for example, nodes (a), (a1) and (a11) can also get the other part of the specific proportion of the transaction. The higher-ranking members can get the bonus from the transaction of the consumer member below the higher-ranking member.

For example, the market price of the product is 100 dollars, and the cost of the product is 65 dollars. When the member 21 buys the product and pays by card in the contracted store 22, the contracted store sells the product at the price of 100 dollars, and the transaction amount is 100 dollars. The judgment means 11 checks the 100 dollars transaction amount in the contracted store 22. According to a contract between the contracted store 22 and the computer system 1, the calculating means 12 deducts a specific proportion amount, for example, 30 dollars, from the transaction. The remaining 70 dollars (100-30) is paid to the contracted store, and the contracted store 22 has a profit of 5 dollars (70-65).

According to the rank of the consumer member 21 in the database, the dispenser 13 dispenses 30 dollars to the consumer member 21 and to the higher-ranking members above the consumer member 21. The 15 dollars is dispensed to the consumer member 21 and is accumulated in the bonus of the consumer member 21. The 40% of the other 15 dollars (30-15) is dispensed to the ten members with higher rank than the consumer member 21. Therefore, each of the ten members has a bonus of 0.6 dollars, and is accumulated in the bonus of the ten members. The 60% of the 15 dollars is the administrative fee of the computer system.

Therefore, by using card to buy something in the contracted store 22, the consumer member 21 can buy a product at a lower price. In the above example, the consumer member 21 actually pays only 85 dollars (100 - 15) to buy the product which has a market price of 100 dollars. Besides, the higher-ranking members above the consumer member 21 can get the bonus from the transaction of the consumer member 21.

For members of the computer system, because the consumer member can get bonus from the card transaction in the contracted store, the members are pleased to buy and pay something by card in the contracted store. On the other hand, for the contracted store and the issuer bank, because of an increase in the transaction of members, the business and the profit of the contracted store and the issuer bank are also increased. Accordingly, the members, the contracted store and the bank can all receive profit.

According to the invention, the card may be a credit card, a stored-valued card, a smart card, an integrated circuit card, a debit card, a combo card or a mondex card. However, the card of the present invention is not limited to the particular forms as illustrated in the above.

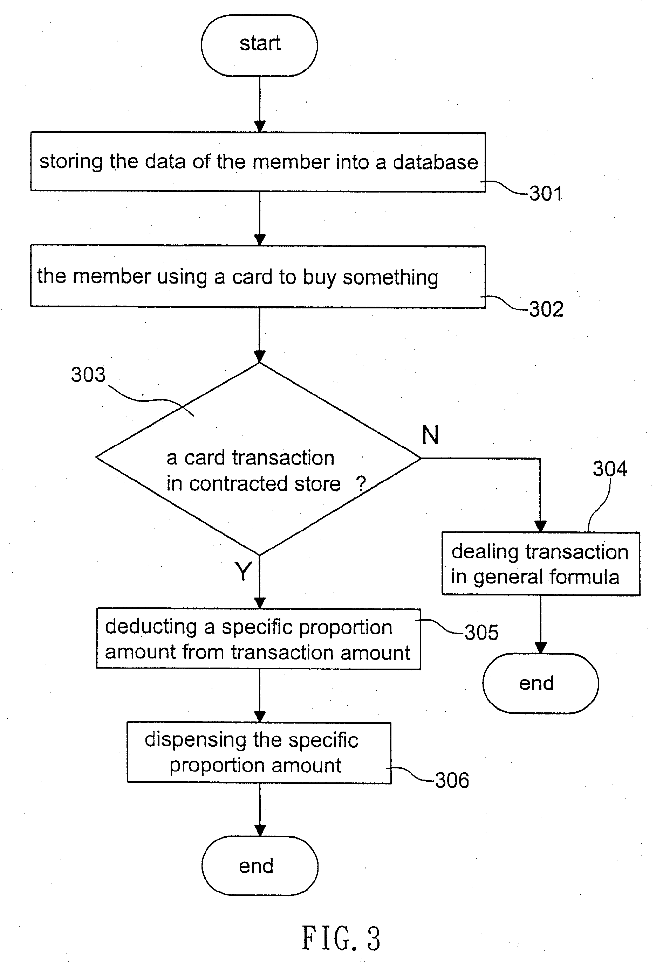

Referring to Fig. 3, the flow chart illustrates the method according to the present invention. In step 301, the data of the member is stored in a database. The database has a plurality of nodes for storing the data of members. Each node has an order and a rank.

In step 302, the consumer member 21 uses a card to buy something. In step 303, the card transaction is judged in a contracted store or an un-contracted store. If the transaction is in the un-contracted store, the transaction is deal in a general formula, as shown in step 304.

If the card transaction of the consumer member 21 is in the contracted store, according to a contract between the contracted store and the computer system 1, the computer system 1 deducts a specific proportion amount from the transaction, as shown in step 305.

In step 306, the specific proportion amount of the transaction is dispensed to the consumer member and to a plurality of higher-ranking members above the consumer member at different percentages. Therefore, many members can get bonuses from the card transaction of the consumer member.

Computer programs can implement the above method. The programs can be loaded into a computer or a programmable information processor to execute the function of the flow chart of Fig. 3. The programs can be stored in a computer-readable medium (for example, magnetic tape, magnetic disc, compact disc, hard disc and IC memory, etc) for future loading them into the computer. Therefore, the invention further discloses a computer-readable medium recording computer-executable programs for the method of the invention.

While an embodiment of the present invention has been illustrated and described, various modifications and improvements can be made by those skilled in the art. The embodiment of the present invention is therefore described in an illustrative but not restrictive sense. It is intended that the present invention is not limited to the particular forms as illustrated, and that all the modifications not departing from the spirit and scope of the present invention are within the scope as defined in the appended claims.

## Claims

1. A computer system for calculating transaction by card of members in the computer system, the computer system comprising:
a judgment means for judging a card transaction of a consumer member in a contracted store with the computer system or an un-contracted store;
a calculating means for deducting a specific proportion amount from the transaction if the transaction is paid by card in the contracted store;
a database, having a plurality of nodes for storing the data of members, each node having an order and a rank; and
a dispenser for dispensing the specific proportion amount to the consumer member and to a plurality of higher-ranking members above the consumer member at different percentages.

2. The computer system as claimed in Claim 1, wherein a plurality of nodes form a tree structure, a plurality of branches are produced from the node, the branch links to a node of the next rank so that each node has a different rank and order with the other nodes.

3. The computer system as claimed in Claim 2, wherein three branches are produced from the node.

4. The computer system as claimed in Claim 1, wherein the specific proportion amount is dispensed to three higher-ranking members above the consumer member at different percentages.

5. A method for calculating transaction by card of members in a computer system, comprising the steps of:
(a) judging a card transaction of a consumer member in a contracted store with the computer system or an un-contracted store;
(b) deducting a specific proportion amount from the transaction if the transaction is paid by card in the contracted store;
(c) forming a database; the database having a plurality of nodes for storing the data of members, each node having an order and a rank; and
(d) dispensing the specific proportion amount to the consumer member and to a plurality of higher-ranking members than the consumer member at different percentages.

6. The method as claimed in Claim 5, wherein a plurality of nodes of the database form a tree structure, a plurality of branches are produced from the node, and the branch links to a node of the next rank so that each node has a different rank and order with the other nodes.

7. The method as claimed in Claim 6, wherein three branches are produced from the node.

8. The method as claimed in Claim 5, wherein the specific proportion amount is dispensed to three higher-ranking members above the consumer member at different percentages.

9. A computer program comprising program code means for executing the method of any one of claims 5 to 8.

10. A computer-readable medium carrying a computer program as claimed in claim 9.
